# EUROPÄISCHE PATENTSCHRIFT

(11) **EP 2 389 299 B1**
(45) Veröffentlichungstag und Bekanntmachung des Hinweises auf die Patenterteilung: **21.11.2012**
(21) Anmeldenummer: 09796330.0
(22) Anmeldetag: 23.12.2009
(51) Int. Cl.: B60G 21/055, B60G 17/02, B60G 11/18, B60G 17/016

(54) **ANORDNUNG EINES STABILISATORS AN EINER RADAUFHÄNGUNG FÜR KRAFTFAHRZEUGE**
ARRANGEMENT OF A STABILIZER ON A WHEEL SUSPENSION FOR A MOTOR VEHICLE
DISPOSITIF DE STABILISATEUR SUR UNE SUSPENSION DE ROUE DE VEHICULE MOTORISE

(30) Priorität: 23.01.2009 DE 102009005895
(43) Veröffentlichungstag der Anmeldung: 30.11.2011
(73) Patentinhaber: Audi AG, 85045 Ingolstadt (DE)
(72) Erfinder: OHLETZ, Armin, 85092 Kösching (DE); SCHMIDT, Walter, 86643 Rennertshofen (DE)
(74) Vertreter: Asch, Konrad
(86) Internationale Anmeldenummer: PCT/EP2009/009237
(87) Internationale Veröffentlichungsnummer: WO 2010/083876

(56) Entgegenhaltungen:
- EP-A1- 1 867 503
- EP-A1- 1 958 804
- EP-A2- 1 894 756
- WO-A1-2007/091667
- DE-A1- 10 126 928
- DE-A1- 10 242 552
- DE-A1-102004 002 550
- JP-A- 2008 302 731
- KR-A- 20070 060 692
- US-A1- 2005 167 932

## Beschreibung

Die Erfindung betrifft eine Anordnung eines Stabilisators an einer Radaufhängung für Kraftfahrzeuge gemäß dem Oberbegriff des Patentanspruches 1.

Derartige Anordnungen von zweigeteilten Stabilisatoren mit einer Stellvorrichtung zum Beeinflussen der Federraten und der Fahreigenschaften von Kraftfahrzeugen zeigen beispielsweise die DE 101 26 928 A1, DE 10 2004 002 550 A1, oder die DE 102 42 552 B4. Dabei kann durch gegensinniges Verstellen der geteilten Torsionsstäbe des insgesamt U-förmigen Stabilisators das Wankverhalten beziehungsweise die Kurvenneigung des Kraftfahrzeuges verringert oder durch gleichsinniges Verstellen der Nickneigung zum Beispiel beim Bremsen entgegengewirkt werden.

Aus der EP 1 958 804 ist eine gattungsgemäße Anordnung eines zweiteilig ausgeführten Stabilisators an einer Radaufhängung für ein Kraftfahrzeug bekannt. Jedes der Stabilisatorteile weist einen querverlaufenden Torsionsstab auf, der an einer Lagerstelle drehbar gelagert ist. Die Lagerstelle ist über einen freien Lagerabstand von der jeweils zugeordneten Stellvorrichtung beabstandet. Dieser Lagerabstand ist um ein Vielfaches größer als der Abstand der Lagerstelle von einem Krafteinleitungspunkt des Abtriebshebels des Stabilisatorteiles.

Aus der US 2005/167932 A1 ist eine weitere Anordnung eines zweiteilig ausgeführten Stabilisators bekannt, die einen Federwegsensor aufweist, der eine Drehbewegung des Abtriebshebels erfasst, aus der eine Einfederbewegung des Fahrzeugrades gegenüber dem Aufbau ermittelbar ist. Gleiches gilt auch für die EP 1 867 503 A1, WO 2007/091667 A1, EP 1 894 756 A2 und JP 2008 302 731 A.

Aufgabe der Erfindung ist es, eine Anordnung der gattungsgemäßen Art vorzuschlagen, die hinsichtlich der steuerungstechnischen Freiheitsgrade und in der Beeinflussung der Federraten und der Fahreigenschaften des Kraftfahrzeuges verbessert ist.

Diese Aufgabe wird erfindungsgemäß mit den Merkmalen des Patentanspruches 1 gelöst. Besonders vorteilhafte Weiterbildungen der Erfindung beschreiben die weiteren Patentansprüche.

Gemäß dem Anspruch 1 sind die querverlaufenden Torsionsstäbe des Stabilisators an zusätzlichen Lagerstellen drehbar gelagert, die über einen Lagerabstand von der jeweils zugeordneten Stellvorrichtung beabstandet sind. Jede der Lagerstellen ist daher über den Lagerabstand räumlich getrennt von der Stellvorrichtung. Auf diese Weise können die Stellvorrichtung bauraumoptimal in etwa fahrzeugmittig angeordnet sein. Der Lagerabstand ist dabei erfindungsgemäß um ein Vielfaches größer als ein Abstand der Lagerstelle von einem Krafteinleitungspunkt in Fahrzeugquerrichtung.

Die Lagerstellen können daher unmittelbar im Bereich des Abtriebshebels vorgesehen sein, während die zugeordnete Stellvorrichtung davon beabstandet in etwa fahrzeugmittig angeordnet ist. Die bei einer Verstellbetätigung von den Radführungselementen auf die Torsionsstäbe wirkenden Biegemomente können daher zum großen Teil von der Lagerstelle aufgenommen werden, während die Stellvorrichtung der Torsionsstäbe lediglich mit Torsionsmomenten beaufschlagt ist.

Für den Fall, dass die beiden Stellvorrichtungen in etwa in der Fahrzeugmitte angeordnet sind, können diese in einem gemeinsamen Gehäuse integriert und hilfsrahmen- beziehungsweise karosseriefest angebracht sein. Beide Stellvorrichtungen können somit über ein gemeinsamen Aktuatorsteuergerät angesteuert werden, welches bevorzugt als ein Anbausteuergerät ausgeführt sein kann. Das gemeinsame Stellvorrichtungsgehäuse bietet einerseits Kostenvorteile. Andererseits ergibt sich durch die radferne Anordnung eine wesentlich geschütztere Einbaulage mit reduzierter Steinschlaggefahr.

Bevorzugt ist eine jede Stellvorrichtung durch ein mit einem Torsionsstab trieblich verbundenes Untersetzungsgetriebe und einen Elektromotor gebildet, obwohl auch hydraulische oder pneumatische Stellvorrichtungen anwendbar sind.

Bei einer Radaufhängung für Kraftfahrzeuge mit einem Hilfsrahmen zur Anlenkung von Radführungselementen können dann die Stellvorrichtungen innerhalb von Längsträgern des Hilfsrahmens positioniert und am Hilfsrahmen befestigt sein. Daraus resultiert eine robuste Anbindung der Stellvorrichtungen an dem Hilfsrahmen, verbunden mit einer in der Fertigung vorteilhaften Schaffung einer Montageeinheit der gesamten Radaufhängung mit Radführungselementen und Stabilisator.

In vorteilhafter Weiterbildung der Erfindung wird vorgeschlagen, dass die quer verlaufenden Torsionsstäbe über diese Lagerstellen hinaus verlängert und trieblich mit koaxial angeordneten, rückführenden Hohlwellen verbunden sind, die dann die Längsarme tragen. Dies führt ebenfalls oder zusätzlich zu einer gezielten Verlängerung der beiden Torsionsstäbe des Stabilisators unter Ausnutzung des im Vorbaubereich des Kraftfahrzeuges zur Verfügung stehenden Bauraumes.

der Erfindung betrifft die Messung des Höhenstandes des Fahrzeugs. Im Stand der Technik befindet sich hierzu ein Höhenstandssensor in einem Achslenker, der den aktuellen Einfederzustand des Rades gegenüber der Karosserie erfasst. Anhand der Höhenbewegung des Sensors kann der Einfederzustand des Rades ermittelt werden. Derartige Sensoren sind mit vergleichsweise hohen Einzelkosten behaftet und relativ ungenau.

Vor diesem Hintergrund kann erfindungsgemäß auf einen solchen Höhenstandssensor verzichtet werden. Anstelle dessen kommt erfindungsgemäß ein Federwegsensor zum Einsatz, der eine Drehbewegung des Abtriebshebels erfasst. Aus dem erfassten Drehwinkel kann dann mittels einer Steuereinrichtung eine Einfederbewegung des Fahrzeugs ermittelt werden.

Erfindungsgemäß ist der Federwegsensor unmittelbar in die, neben dem Abtriebshebel angeordnete Lagerstelle integriert, etwa auf einer Lagerkonsole angeordnet ist, in der das Stützlager für den Torsionsstab eingefasst ist.

In einer bevorzugten Ausführungsform können die Stellvorrichtungen mit einer integrierten Bremse oder Sperre versehen sein. Die Bremse beziehungsweise Sperre kann in einem unbestromten Zustand eine offene oder geschlossene Stellung einnehmen und mittels elektrischer Betätigung von der offenen in die geschlossene Stellung und umgekehrt schaltbar sein. Erfindungsgemäß kann daher die Bremse oder Sperre in die offene geschlossene Stellung umgeschaltet werden, ohne dass die Stellvorrichtung dauernd bestromt werden müsste. Eine solche Stromzufuhr ist im Unterschied zur Erfindung dann erforderlich, wenn keine solche integrierte Bremse vorgesehen. In diesem Fall muss ein gewisser Ruhestrom fließen, um ein ungewolltes Verdrehen der Motor-/Getriebewellen zu verhindern oder um eine unbeabsichtigte Niveauverstellung zu verhindern.

Wie aus obiger Beschreibung hervorgeht, kann die Sperre/Bremse im stromlosen Zustand willkürlich offen als auch gesperrt sein. Das heißt, die Sperre kann aktiv verriegelt und aktiv entriegelt werden. So kann bei einem ersten Stromimpuls ein Verriegeln, bei einem weiteren Stromimpuls ein Entriegeln und darauffolgend wieder ein Verriegeln bewirkt werden. Da erfindungsgemäß die Sperre/Bremse lediglich aktiv verriegelt und aktiv entriegelt wird, ist auch keine Halte-Energie im Stand erforderlich. In beiden Stellungen kann die Bremse/Sperre nach dem Umschalten unbestromt sein, also das elektrische Bordnetz des Fahrzeuges nicht belasten. Zudem muss das elektromagnetische Stellelemente der Bremse oder der Sperre nicht auf Dauerbelastung ausgelegt sein.

Ein Ausführungsbeispiel der Erfindung ist im folgenden näher erläutert. Es zeigen:
**Fig. 1** eine Draufsicht auf eine hintere Radaufhängung für Kraftfahrzeuge, mit einem Hilfsrahmen, radführenden Lenkern, einem zweiteiligen Stabilisator und zwei auf die quer verlaufenden Torsionsstäbe des Stabilisators wirkende, elektromechanische Stellvorrichtungen; und
**Fig. 2**einen Längsschnitt gemäß Linie I-I der **Fig. 1** durch eine der Stabilisatorlagerungen mit verlängertem Torsionsstab und einer rückführenden Hohlwelle.

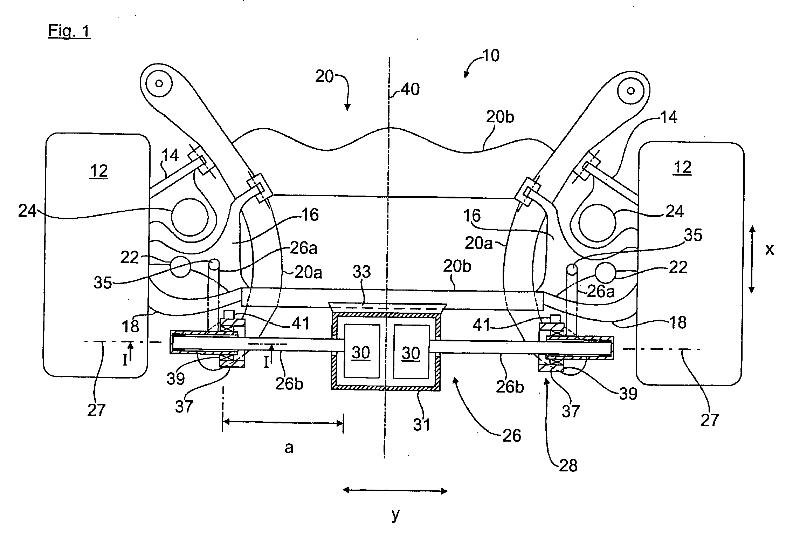

Die **Fig. 1** zeigt grob schematisch eine hintere Radaufhängung 10 für die hinteren Räder 12 eines Kraftfahrzeuges, wobei die nicht näher dargestellten, radführenden Lenker 14, 16, 18 radseitig an einem Radträger (nicht ersichtlich) und aufbauseitig an einem Hilfsrahmen 20 schwenkbar angelenkt sind. Der Hilfsrahmen 20 weist wie ersichtlich zwei Längsträger 20a und zwei Querträger 20b auf und ist in nicht dargestellter Weise am Aufbau des Kraftfahrzeuges über dämpfende Lager befestigt.

Ferner sind je ein Stoßdämpfer 22 und eine Tragfeder 24 zwischen den Lenkern 14, 18 und dem Aufbau des Kraftfahrzeuges in bekannter Weise angeordnet. Die Radaufhängung 10 kann in modifizierter Form auch als Radaufhängung für die vorderen, gelenkten Räder eines Kraftfahrzeuges ausgelegt sein.

Des Weiteren ist gemäß der **Fig.1** an der Radaufhängung 10 ein im Wesentlichen U-förmiger, zweiteiliger Stabilisator 26 über Lagerstellen 28 drehbar gelagert, dessen im Wesentlichen in Fahrzeuglängsrichtung verlaufende Längsarme beziehungsweise Abtriebshebel 26a an dem unteren Lenker 16 der Radaufhängung 10 angelenkt sind.

Der zweigeteilt ausgeführte Stabilisator 26 ist hinsichtlich seiner Wirkung auf die Lenker 16 mittels zweier elektromechanischer Stellvorrichtungen 30 verstellbar, die sich aus je einem Elektromotor und einem beispielsweise selbsthemmenden Untersetzungsgetriebe zusammensetzen.

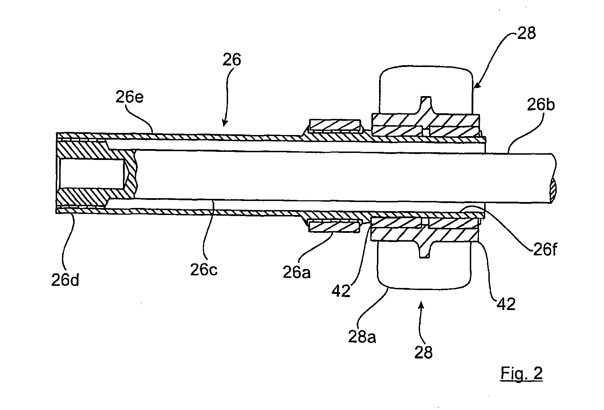

Der zweigeteilte Stabilisator 26 setzt sich, wie aus **Fig. 1** **und** **2** ersichtlich ist, wie folgt zusammen:

Ein jeder im Wesentlichen quer verlaufender Torsionsstab 26b erstreckt sich ausgehend von den Längsarmen beziehungsweise Abtriebshebein 26a über die senkrechte Fahrzeug-Mittellängsebene (strichpunktierte Linie 40) hinaus bis zur zugeordneten Stellvorrichtung 30, mit der er trieblich zum Beispiel mittels einer Keilverzahnung (nicht dargestellt) verdrehfest verbunden ist.

Die Drehachsen 27 der Torsionsstäbe 26b sind in der **Fig. 1** koaxial zueinander ausgerichtet. In technischer Realisierung können die beiden Achsen 27 sich überkreuzend und leicht nach oben gepfeilt ausgeführt sein. Vorteilhaft sind die Torsionsstäbe 26b zusammen mit ihren Abtriebshebeln 26a derart symmetrisch ausgeführt, dass die Torsionsstäbe 26b als Gleichteile links- oder rechtsseitig der Radaufhängung 10 verbaubar sind.

Wie aus der **Fig. 1** hervorgeht, sind die beiden Lagerstellen 28 über einen Lagerabstand a von den Stellvorrichtungen 30 beabstandet. Der Lagerabstand a ist dabei so bemessen, dass er um ein Vielfaches größer ist als der Abstand b der Lagerstelle 28 von dem Krafteinleitungspunkt 35 des Abtriebshebels 26a in Fahrzeugquerrichtung y. Die beiden Stellvorrichtungen 30 sind dabei in einem gemeinsamen Gehäuse 31 angeordnet, das wiederum über eine Konsole 33 am hinteren Querträger 20b des Hilfsrahmens 20 befestigt ist.

Die von den Stellvorrichtungen 30 beabstandeten Lagerstellen 28 sind in Querrichtung y unmittelbar neben den Abtriebshebeln 26a, das heißt nahe an den Krafteinleitungspunkten 35 auf den Lenkern 16 angeordnet, wodurch die auf die Lagerstellen 28 wirkenden Biegemomente reduziert sind. Sowohl die Lagerstellen 28 als auch das Stellvorrichtungsgehäuse 31 sind unmittelbar am hinteren Querträger 20b des Hilfsrahmens 20 befestigt.

Ein jeder Torsionsstab 26b (vergleiche **Fig. 2**) ist mit einem Abschnitt 26c frei durch die Lagerstelle 28 hindurch und über die Anbindungsstelle des Abtriebshebels 26a hinaus um ein definiertes Maß verlängert und an seinem Ende über eine Keilverzahnung 26d drehfest mit einer Hohlwelle 26e verbunden, die wie ersichtlich den Längsarm 26a trägt. Das auf den Längsarm 26a ausgeübte Torsionsmoment des Torsionsstabes 26b, 26c wird somit über die Keilverbindung 26d und die Hohlwelle 26e wieder rückgeführt.

Die Hohlwelle 26e ist gemäß der **Fig. 2** mittels eines angeformten Lagerhalses 26f und über zwei Nadellager 42 in der durch die Lagerschalen 28a gebildeten, aufbaufesten Lagerstelle 28 drehbar gelagert und bildet somit die Führung sowohl der Hohlwelle 26e, als auch des Torsionsstabes 26b, 26c im Übergangsbereich zum auf der Hohlwelle 26e befestigten Längsarm 26a. Anstelle der oben erwähnten Nadellager 42 sind auch andere geeignete Lager-Ausführungen möglich.

Wie aus der **Fig. 1** weiter hervorgeht, sind an beiden Lagerstellen 28 für die Torsionsstäbe 26b Lagerkonsolen 37 an die Längsträger 20a des Hilfsrahmens 20 angeformt. Diese tragen jeweils die Stützlager 39 zur drehbaren Lagerung der Torsionsstäbe 26b. Außenseitig auf den Lagerkonsolen 37 sind Federwegsensoren 41 angeordnet. Diese erfassen eine Drehbewegung der Abtriebshebel 26a. Aus dem jeweils erfassten Drehwinkel kann dann mittels einer nicht gezeigten Steuereinrichtung die Einfederbewegung des Fahrzeuges ermittelt werden.

## Patentansprüche

1. Anordnung eines zweiteilig ausgeführten Stabilisators (26) an einer Radaufhängung für ein Kraftfahrzeug, mit getrennt voneinander ausgeführten Torsionsstäben (26b), die jeweils über einen Abtriebshebel (26a) an Radaufhängungselementen (16) angelenkt sind und mittels jeweils zugeordneter Stellvorrichtungen (30) gleich- oder gegensinnig miteinander verdrehbar sind, wobei die querverlaufenden Torsionsstäbe (26b) an Lagerstellen (28) drehbar gelagert sind, die über einen freien Lagerabstand (a) von der jeweils zugeordneten Stellvorrichtung (30) beabstandet sind, welcher Lagerabstand (a) um ein Vielfaches größer ist als der Abstand (b) der Lagerstelle (28) von einem Krafteinleitungspunkt (35) des Abtriebshebels (26a) in Fahrzeugquerrichtung (y), und wobei die Anordnung einen Federwegsensor (41) aufweist, der eine Drehbewegung des Abtriebshebels (26a) erfasst, aus der eine Einfederbewegung des Fahrzeugrades gegenüber dem Aufbau ermittelbar ist, **dadurch gekennzeichnet, dass** der Federwegsensor (41) unmittelbar in den Lagerstellen (28) der Torsionsstäbe (26b) angeordnet ist.

2. Anordnung nach Anspruch 1, **dadurch gekennzeichnet, dass** die beiden den Torsionsstäben (26b) zugeordneten Stellvorrichtungen (30) in Fahrzeugquerrichtung (y) mittig, insbesondere in einem gemeinsamen Gehäuse (31), angeordnet sind.

3. Anordnung nach Anspruch 1 oder 2, **dadurch gekennzeichnet, dass** die Lagerstellen (28) unmittelbar neben den Abtriebshebeln (26a) des Stabilisators (26) angeordnet sind.

4. Anordnung nach einem der vorhergehenden Ansprüche, **dadurch gekennzeichnet, dass** das gemeinsame Stellvorrichtungsgehäuse (31) und/oder die an den Lagerstellen (28) vorgesehenen Stützlager getrennt voneinander karosserie- oder hilfsrahmenfest befestigt sind.

5. Anordnung nach einem der Ansprüche 1 bis 4, **dadurch gekennzeichnet, dass** eine jede Stellvorrichtung (30) durch ein mit einem Torsionsstab (26b) trieblich verbundenes Untersetzungsgetriebe und einen Elektromotor gebildet ist.

6. Anordnung nach einem der vorhergehenden Ansprüche, **dadurch gekennzeichnet, dass** bei einer Radaufhängung (10) für Kraftfahrzeuge mit einem Hilfsrahmen (20) zur Anlenkung von Radführungselementen (14, 16, 18) die Stellvorrichtungen (30) innerhalb von Längsträgern (20a) des Hilfsrahmens (20) positioniert sind.

7. Anordnung nach einem der vorhergehenden Ansprüche, **dadurch gekennzeichnet, dass** die quer verlaufenden Torsionsstäbe (26b) über die Lagerstellen (28) hinaus verlängert sind und trieblich mit koaxial angeordneten, rückführenden Hohlwellen verbunden sind, die wiederum die Antriebshebel (26a) tragen.

8. Anordnung nach Anspruch 7, **dadurch gekennzeichnet, dass** die Torsionsstäbe (26b) frei durch die Lagerstellen (28) hindurchgeführt sind und dass insbesondere die rückführenden Hohlwellen (26e) unmittelbar in den Lagerstellen (28) drehbar gelagert sind.

9. Anordnung nach einem der vorhergehenden Ansprüche, **dadurch gekennzeichnet, dass** die den Torsionsstäben (26b) zugeordneten Stellvorrichtungen (30) mit einer integrierten Bremse oder Sperre versehen sind, welche Bremse beziehungsweise Sperre insbesondere im unbestromten Zustand eine offene oder geschlossene Stellung einnimmt, und mittels elektrischer Betätigung von der offenen in die geschlossene Stellung und umgekehrt schaltbar ist.

## Claims

1. Arrangement of a two-part stabiliser (26) at a wheel suspension for a motor vehicle, comprising mutually separated torsion bars (26b) which are articulated to wheel suspension elements (16) via respective output levers (26a) and can be rotated in the same direction as each other or in different directions by means of respectively allocated adjusting devices (30), the transversely extending torsion bars (26b) being rotatably mounted at bearing points (28) which are spaced apart from the respectively allocated adjusting devices (30) via a free bearing clearance (a), which bearing clearance (a) is four times greater than the clearance (b) of the bearing point (28) from a force introduction point (35) of the output lever (26a) in the transverse direction (y) of the vehicle, and the arrangement comprising a suspension travel sensor (41) which detects a rotational movement of the output lever (26a), from which a deflection movement of the vehicle wheel in relation to the body can be determined, **characterised in that** the suspension travel sensor (41) is arranged directly in the bearing points (28) of the torsion bars (26b).

2. Arrangement according to claim 1, **characterised in that** the two adjusting devices (30) allocated to the torsion bars (26b) are arranged centrally in the transverse direction (y) of the vehicle, in particular in a common housing (31).

3. Arrangement according to either claim 1 or claim 2, **characterised in that** the bearing points (28) are arranged directly next to the output levers (26a) of the stabiliser (26).

4. Arrangement according to any of the preceding claims, **characterised in that** the common adjusting device housing (31) and/or the support bearings provided at the bearing points (28) are fixed to the body or an auxiliary frame so as to be mutually separate.

5. Arrangement according to any of claims 1 to 4, **characterised in that** each adjusting device (30) is formed by a reduction gear which is drivingly connected to a torsion bar (26b) and by an electric motor.

6. Arrangement according to any of the preceding claims, **characterised in that**, in a wheel suspension (10) for motor vehicles which comprises an auxiliary frame (20) for the articulation of wheel guide elements (14, 16, 18), the adjusting devices (30) are positioned inside longitudinal members (20a) of the auxiliary frame (20).

7. Arrangement according to any of the preceding claims, **characterised in that** the transversely extending torsion bars (26b) are extended beyond the bearing points (28) and are drivingly connected to coaxially arranged hollow return shafts which in turn carry the output levers (26a).

8. Arrangement according to claim 7, **characterised in that** the torsion bars (26b) are guided freely through the bearing points (28) and **in that** in particular the hollow return shafts (26e) are rotatably mounted directly in the bearing points (28).

9. Arrangement according to any of the preceding claims, **characterised in that** the adjusting devices (30) allocated to the torsion bars (26b) are provided with an integrated brake or lock, which brake or lock in particular when no current is supplied adopts an open or closed position, and can be switched from the open to the closed state and vice versa via electrical actuation.

## Revendications

1. Aménagement d'un stabilisateur (26) en deux parties sur une suspension de roue pour un véhicule automobile, avec des barres de torsion (26b) réalisées séparément l'une de l'autre, qui sont articulées respectivement via un levier d'entraînement (26a) sur des éléments (16) de la suspension de roue et peuvent tourner l'une avec l'autre dans le même sens ou dans le sens inverse au moyen de dispositifs de commande (30) respectivement affectés, dans lequel les barres de torsion (26b) s'étendant transversalement sont montées à rotation sur des paliers (28) qui sont distancés d'un espace libre de paliers (a) du dispositif de commande (30) respectivement affecté, laquelle distance de paliers (a) est plus grande d'un multiple que la distance (b) du palier (28) depuis un point d'introduction de force (35) du levier d'entraînement (26a) dans la direction transversale (y) du véhicule, et dans lequel l'aménagement présente un capteur de débattement (41) qui capte un mouvement de rotation du levier d'entraînement (26a) à partir duquel un débattement de la roue du véhicule par rapport à la carrosserie peut être déterminé, **caractérisé en ce que** le capteur de débattement (41) est aménagé directement dans les paliers (28) des barres de torsion (29b).

2. Aménagement selon la revendication 1, **caractérisé en ce que** les deux dispositifs de commande (30) affectés aux barres de torsion (26b) sont aménagés dans la direction transversale (y) du véhicule au centre, en particulier dans un boîtier commun (31).

3. Aménagement selon la revendication 1 ou la revendication 2, **caractérisé en ce que** les paliers (28) sont aménagés directement à côté des leviers d'entraînement (26a) du stabilisateur (26).

4. Aménagement selon l'une quelconque des revendications précédentes, **caractérisé en ce que** le boîtier commun (31) des dispositifs de commande et/ou les coussinets d'appui prévus sur les paliers (28) est ou sont fixés séparément l'un de l'autre de manière fixe sur la carrosserie ou un châssis auxiliaire.

5. Aménagement selon l'une quelconque des revendications 1 à 4, caractérisé en ce chaque dispositif de commande (30) est formé par une transmission de démultiplication reliée en service à une barre de torsion (26b) et un moteur électrique (6).

6. Aménagement selon l'une quelconque des revendications précédentes, **caractérisé en ce que**, dans le cadre d'une suspension de roue (10) pour des véhicules automobiles avec un châssis auxiliaire (20) pour l'articulation d'éléments de suspension de roue (14, 16, 18), les dispositifs de commande (13) sont positionnés à l'intérieur de poutres longitudinales (20a) du châssis auxiliaire (20).

7. Aménagement selon l'une quelconque des revendications précédentes, **caractérisé en ce que** les barres de torsion (26b) s'étendant transversalement sont prolongées au-delà des paliers (28) et sont reliées en service avec des arbres creux de retour agencés coaxialement, qui portent à nouveau le levier d'entraînement (26a).

8. Aménagement selon la revendication 7, **caractérisé en ce que** les barres de torsion (26b) passent librement à travers les paliers (28) et **en ce que**, en particulier, les arbres creux de retour (26e) sont montés à rotation directement dans les paliers (28).

9. Aménagement selon l'une quelconque des revendications précédentes, **caractérisé en ce que** les dispositifs de commande (30) affectés aux barres de torsion (26b) sont dotés d'un frein ou d'un blocage, lequel frein ou blocage adopte, en particulier à l'état non parcouru par le courant, une position ouverte ou fermée et peut passer de la position ouverte à la position fermée au moyen d'une commande électrique et vice-versa.
